# EUROPEAN PATENT APPLICATION

(11) **EP 3 143 978 A1**
(43) Date of publication of application: **22.03.2017**
(21) Application number: 16170395.4
(22) Date of filing: 19.05.2016
(51) Int. Cl.: A61G 15/12

(54) **ARMREST FOR DENTAL CHAIR WITH MOUSE TOUCH DEVICE FOR PATIENT USE**

(30) Priority: 16.09.2015 BR 102015023851
(71) Applicant: Pagano Bringel, Raquel, SP - 14110-000 Ribeirao Preto (BR)
(72) Inventor: Pagano Bringel, Raquel, SP - 14110-000 Ribeirao Preto (BR)
(74) Representative: Sarpi, Maurizio

(57) **Abstract**

Armrest for dental chair with mouse touch device for patient use comprising an armrest (1) fixed to the dental chair, featuring a mouse touch-type input peripheral (2) on its edge connected via USB or radio frequency wireless connection to a CPU, central processing unit (3), which manages programs and sends information to an LCD, liquid crystal display (4), placed within sight of the patient, regardless of the height and tilting movements of the dental chair, enabling patient interaction with various interface programs, such as Internet access, games, watching videos, choose music media or social media, among others, simply using the fingertips.

## Description

This application for invention patent privilege relates to an armrest for dental chair with a mouse touch device for patient use during treatment by a dental surgeon. This device uses touch-sensitive cell and enables patient interaction with the central processing unit (CPU) and peripherals using the fingertips only. The interaction through the touch device aims at providing information and entertainment at the patient's choice during the dental treatment with no interference or hindrance to the performance of the dental surgeon, since the patient will only use his/her fingertips.

During any procedure of the dental treatment, the patient tends to become tense and nervous, adding an extra difficulty to the dental surgeon, which is to evaluate the patient's anxiety levels, in order to perform the procedures with skill and calmness. Currently, dental equipment market does not feature any kind of device that enables interactive entertainment of the patient during the appointment, with no interference or hindrance of the performance of the dental surgeon.

The armrest for dental chair with mouse touch device has as its main objective to provide to the patient, during dental treatment, the interactive use of various information and entertainment systems, such as Internet access, games, media or social media, watching TV, choose music, and many other applications which are installed on the information central processing unit, either audio, visual or audiovisual simply using the fingertips, thus not interfering with the dental surgeon's work.

The several interaction possibilities enable the patient to choose and enjoy the form of entertainment that best suits him/her during dental treatment, and consequently, allowing the dental surgeon to perform his/her job with higher concentration and calmness.

The armrest for dental chair with mouse touch device for patient use presented herein shall be better viewed as per the following figures:

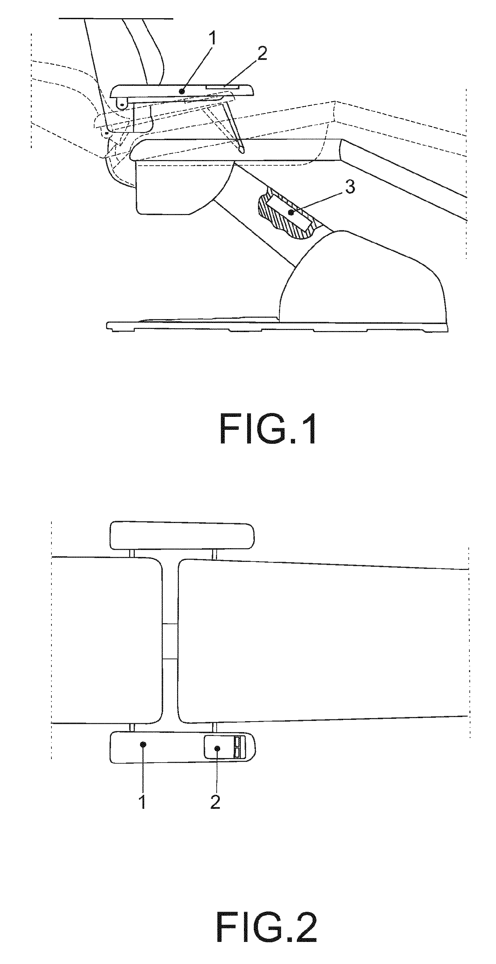

Figure 1 is a partial view of the dental chair, which shows the armrest with the mouse touch device.
Figure 2 is an upper partial view of the dental chair, which shows the armrest with the mouse touch device.

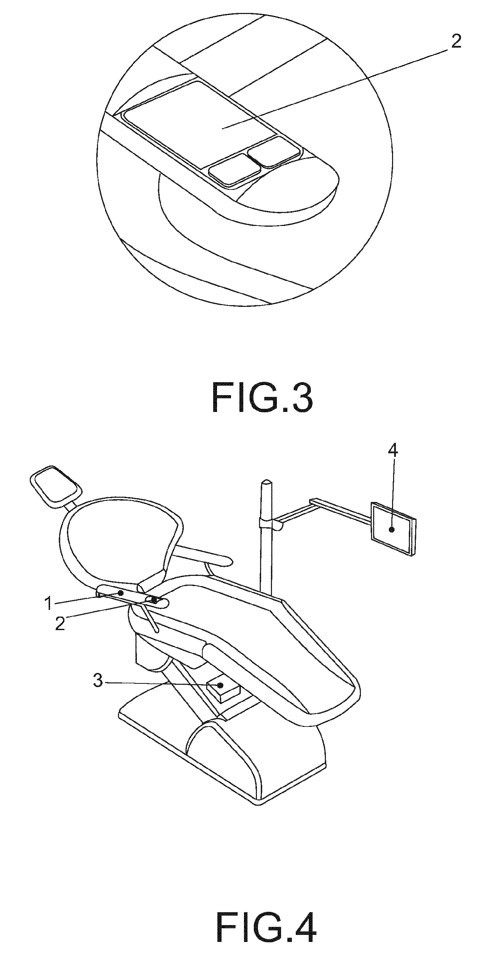

Figure 3 is the perspective sectional view of the armrest of the dental chair with mouse touch device.
Figure 4 is the perspective view of the dental chair with the armrest with mouse touch device, CPU and LCD Monitor.

The armrest for dental surgeon with mouse touch device for patient use refers to an armrest for a dental chair, which comprises an integrated mouse touch-type input device, near its edge, easily enabling hand and finger contact to the screen and buttons of the mouse touch, in order to provide access to the patient to available connected devices during treatment by a dental surgeon. For complementary information content, the system comprises a CPU with installed interface programs and an LCD monitor, placed within sight of the patient, regardless of the height and tilt variations produced by the dental chair.

The patent application herein is comprised by the armrest of the dental chair (1), which acts as a resting point for the arm and hand of the patient and which features, near its edge, a mouse touch device (2), which is interconnected via USB or wireless radio frequency connection to the CPU, a central processing unit (3) which, in turn, manages the programs and images and sends information to a LCD (liquid crystal display) screen (4), enabling interaction of the patient with various interface programs, such as Internet access, games, watching videos, choose music, media or social media, among others.

It shall be evident that, while the above description is merely illustrative of this privilege application, all other modifications and variations made to this application, as to be apparent to those skilled in the art, are considered to be within the scope of this patent privilege application.

## Claims

1. Armrest for dental chair with mouse touch device for patient use, wherein it is an armrest fixed on dental chairs (1) comprising an integrated mouse touch-type input peripheral (2) connected via USB or radio frequency wireless connection to a CPU, central processing unit (3), which manages programs and sends information to an LCD, liquid crystal display (4), providing patient interaction with various interface programs, such as Internet access, games, watching videos, choose music, media or social media, among others.
